# EUROPEAN PATENT SPECIFICATION

(11) **EP 3 783 238 B1**
(45) Date of publication and mention of the grant of the patent: **30.11.2022**
(21) Application number: 19203105.2
(22) Date of filing: 14.10.2019
(51) Int. Cl.: F16C 27/06, F16C 27/08, F16C 35/077, F16C 19/06, F16C 25/08

(54) **BRUSH CUTTER**
FREISCHNEIDER
DÉBROUSSAILLEUSE

(30) Priority: 23.08.2019 JP 2019152817
(43) Date of publication of application: 24.02.2021
(73) Proprietor: Taiseimonac Co., Ltd., Higashiosaka-shi, Osaka 578-0912 (JP)
(72) Inventor: HIRAKI, Seiji, Higashiosaka, Osaka 578-0912 (JP)
(74) Representative: Emmi, Mario

(56) References cited:
- EP-A1- 3 006 750
- DE-A1- 2 854 566
- US-A- 5 207 512
- US-A- 5 857 782
- US-A1- 2005 028 382

## Description

### [Technical Field]

The present invention relates to a brush cutter.

### [Related Art]

As brush cutters used when mowing work is conducted, there are used a large number of brush cutters having a structure in which a blade rotating in one direction is provided at the front end of a rod, and the blade is rotated by a drive unit provided at the back end of the rod. In a conventional brush cutter, a drive shaft for rotating a blade is disposed in a pipe of a rod, and the drive shaft is rotatably held in the pipe by use of a plurality of bushes (slide bearings) (see Patent Literatures 1 and 2).

In the case of a brush cutter using an engine, rotational resistance of a drive shaft resulting from a brush does not become a great problem. However, in the case of a rechargeable brush cutter using a battery, there is a problem of shortening of the duration time of the battery due to rotational resistance of a drive shaft resulting from the use of a bush.

US 2005/028382 A1 discloses a brush cutter wherein the drive shaft is supported by a sliding bearing.

### [Citation List]

### [Patent Literature]

[Patent Literature 1] Japanese Unexamined Patent Application Publication No. 2016-36341
[Patent Literature 2] Japanese Unexamined Patent Application Publication No. 2015-8636
[Patent Literature 3] US 2005/028382 A1

### [Summary of Invention]

### [Technical Problem]

In order to solve the conventional problems, the present invention is intended to provide a brush cutter having a drive shaft bearing capable of reducing rotational resistance of a drive shaft by use of a bearing instead of a bush (slide bearing).

### [Solution to Problem]

A brush cutter according to the present invention has a drive shaft bearing including a ball bearing, a cylindrical holder, and an elastic ring, wherein the holder is formed by combining two members divided parallel to an axial direction, and is assembled in a state where an outer peripheral part of the bearing is stored in an inner groove formed on an inner peripheral surface of the holder in a peripheral direction, and the elastic ring is stored in an outer groove formed on an outer peripheral surface of the holder in the peripheral direction.

A plurality of outer grooves of the holder may be formed on the outer peripheral surface of the holder, and the elastic ring is inserted in at least one of the outer grooves.

An O-ring may be used as the elastic ring.

The divided members of the holder may be provided, on the surfaces thereof facing each other, with a depression and a projection, and the projection of one of the members is inserted into the depression of the other member when the holder is assembled.

The holder may be made of resin, rubber, or metal.

### [Advantageous Effects of Invention]

A brush cutter according to the present invention has a drive shaft bearing including a ball bearing, a cylindrical holder, and an elastic ring, wherein the holder is formed by combining two members divided parallel to an axial direction, and is assembled in a state where an outer peripheral part of the bearing is stored in an inner groove formed on an inner peripheral surface of the holder in a peripheral direction, and the elastic ring is stored in an outer groove formed on an outer peripheral surface of the holder in the peripheral direction. This enables reduction of rotational resistance, and further brings about advantageous effects of little off-center of a shaft and satisfactory workability of assembly.

A plurality of outer grooves may be formed on the outer peripheral surface of the holder, and the elastic ring can be inserted in at least one of the outer grooves. Therefore, a press-fitting load of the shaft bearing can be adjusted by changing the number of elastic rings.

The divided members of the holder may be provided, on the surfaces thereof facing each other, with a depression and a projection, and the projection of one of the members is inserted into the depression of the other member when the holder is assembled. This can facilitate positioning when the holder is assembled, and can allow the holder to be assembled with ease and with satisfactory accuracy.

With the brush cutter according to claim 1, the rotational resistance of the drive shaft can be reduced more than heretofore. Particularly, in the case of a rechargeable brush cutter using a battery, the duration time of the battery can be longer.

### [Brief Description of the Drawings]

[FIG. 1] FIG.1 is a perspective view of a drive shaft bearing of a brush cutter according to the present invention.
[FIG. 2] FIG. 2 is a perspective view of the shaft bearing without an O-ring.
[FIG. 3] FIG. 3 is a perspective view of a divided holder and a ball bearing.
[FIG. 4] FIG. 4 is a sectional view of the shaft bearing.
[FIG. 5] FIG. 5 is a sectional view of a shaft bearing in another form.
[FIG. 6] FIG. 6 is a sectional view of a rod of a brush cutter using a shaft bearing.

### [Best Mode for Carrying out the Invention]

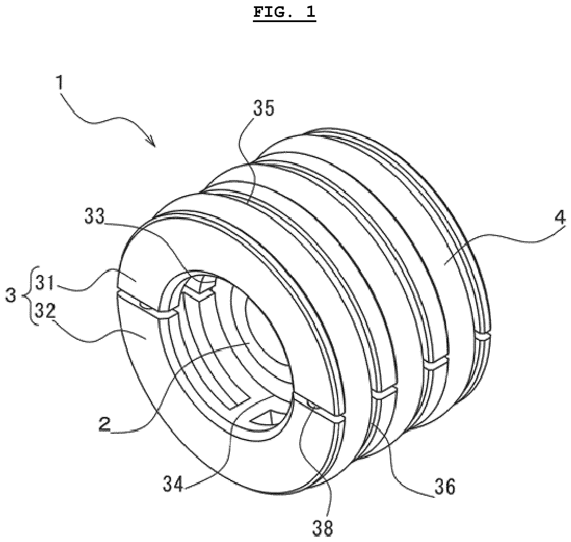

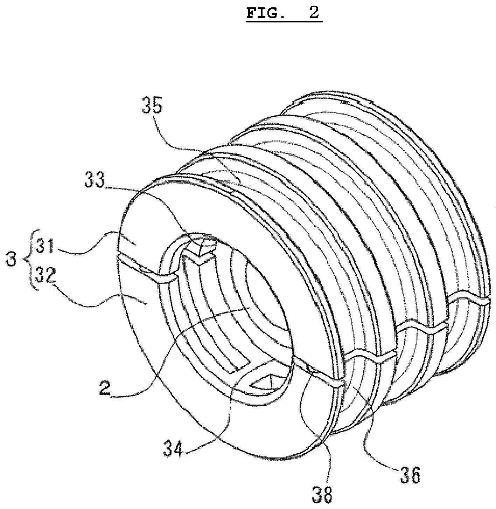

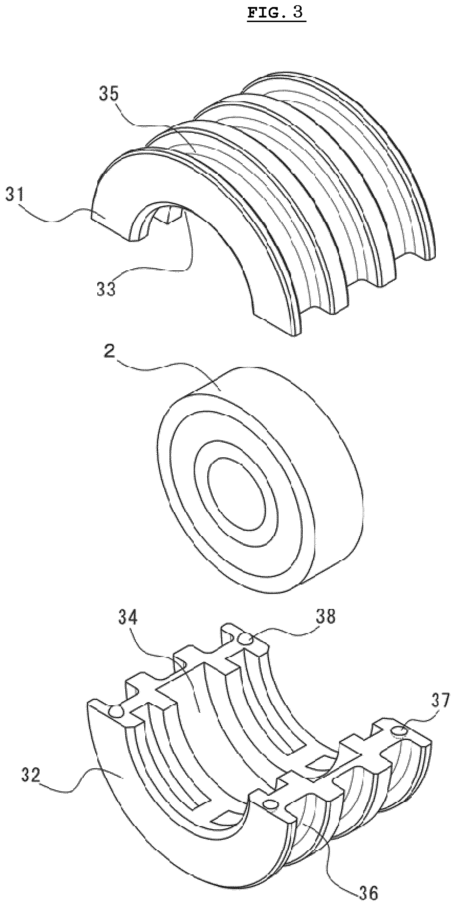

A drive shaft bearing 1 of a brush cutter according to the present invention is described below in detail by use of the drawings. FIG. 1 is a perspective view of the shaft bearing 1 according to the present invention. FIGs. 2 and 3 are perspective views illustrating a disassembled state of the shaft bearing 1. The shaft bearing 1 according to the present invention is configured by combining a bearing 2, a cylindrical holder 3, and O-rings 4 which are a plurality of elastic rings.

The bearing 2 is a ball bearing, and a conventional ball bearing can be selected and then used to suit to a shaft borne by the shaft bearing 1. The holder 3 has a cylindrical shape, and is configured by combining a first member 31 and a second member 32 which are two members divided parallel to an axial direction. The first member 31 and the second member 32 have the same shape, and are the same members.

The first member 31 has one inner groove 33 formed on an inner peripheral surface in a peripheral direction, and three outer grooves 35 formed on an outer peripheral surface in the peripheral direction. The second member 32 also has one inner groove 34 formed on an inner peripheral surface in a peripheral direction, and three outer grooves 36 formed on an outer peripheral surface in the peripheral direction. When the first member 31 and the second member 32 are combined, the inner groove 33 and the inner groove 34 are connected and thus form one annular inner groove in which hold the bearing 2 can be held, whereas the outer grooves 35 and the outer grooves 36 are connected and thus form three annular outer grooves in which the O-rings 4 can be stored.

The numbers of the outer grooves 35 and the outer grooves 36 are not limited to three, and can be suitably changed depending on the purpose, size, and others of the shaft bearing 1. Moreover, the outer grooves 35 and the outer grooves 36 having different depth and width can be arranged in parallel. It is also possible to provide more than one inner groove 33 and more than one inner groove 34, and a plurality of bearings 2 can be held, or one bearing 2 can be held by being selected from a plurality of inner grooves.

The first member 31 has two depressions and two projections provided on the surface facing the second member 32 (not illustrated), and the second member 32 has two depressions 37 and two projections 38 provided on the surface facing the first member 31. As illustrated in FIG. 3, the two depressions 37 are provided at one end of the second member 32, and the two projections 38 are provided at another end, whereas the two depressions and the two projections are provided at the same positions in the first member 31 as well. Accordingly, when the first member 31 and the second member 32 are to be combined, the depressions 37 of the second member 32 are put to face the projections of the first member 31, and the projections 38 of the second member 32 are put to face the depressions of the first member 31. Then, the projections 38 of the second member 32 are inserted into the depressions of the first member 31, and the projections of the first member 31 are inserted into the depressions of the second member 32. Thereby, the first member 31 and the second member 32 can be easily positioned and then accurately combined. The projections and the depressions are not particularly limited in number, position, and shape, and can be suitably changed.

When the first member 31 and the second member 32 are combined, a gap is provided between the end of the first member 31 and the end of the second member 32, as illustrated in FIGs. 1, 4, and 5. Thereby, when the bearing 2 is caught in the first member 31 and the second member 32 and then fixed by the O-rings 4, the bearing 2 can be more firmly held. It is also possible to provide no gap by bringing the end of the first member 31 and the end of the second member 32 into contact with each other.

The holder 3 can be formed by resin, rubber, or metal (e.g., aluminum), and can have the inner peripheral surface thinned as illustrated in FIG. 3 for lighter weight. The dividing number of the holder 3 is not limited to two, but can be three or four. However, the holder 3 is preferably divided into the same size and the same shape in terms of manufacturing cost.

The O-rings 4 have a size which can be stored in the three annular outer grooves on the outer peripheral surface of the holder 3. By inserting the O-rings 4 in at least one of the three annular outer grooves on the outer peripheral surface of the holder 3, the bearing 2 can be held in the holder 3, and the holder 3 can be kept in a cylindrical shape. Although the present embodiment is described by using the O-ring as an elastic ring, an elastic ring is not limited to an O-ring, and has only to be able to fix the holder 3. For example, a ring-shaped rubber band or the like can be used. Further, the sectional shape of the annular outer grooves of the holder 3 can also be suitably changed to suit to the sectional shape of the elastic ring.

Next, an assembly method of the drive shaft bearing 1 of the brush cutter according to the present invention is described. From the state in FIG. 3, the bearing 2 is put into the inner groove 34 of the second member 32, over which the first member 31 is then put. The top of the bearing 2 is then put into the inner groove 33 of the first member 31, and the bearing 2 is caught in the first member 31 and the second member 32, as illustrated in FIG. 2. The first member 31 and the second member 32 are then combined.

In this instance, the projections 38 of the second member 32 are inserted into the depressions of the first member 31, and the projections of the first member 31 are inserted into the depressions of the second member 32. Thereby, the first member 31 and the second member 32 can be combined without misalignment. Additionally, an outer peripheral part of the bearing 2 is stored in the inner groove 33 of the first member 31 and the inner groove 34 of the second member 32. Thereby, the bearing 2 is fixedly held onto the inner peripheral surface of the holder 3, as illustrated in FIG. 2.

After the first member 31 and the second member 32 are combined, the O-rings 4 are respectively inserted into the three annular outer grooves on the outer peripheral surface of the holder 3. The first member 31 and the second member 32 are fixed to each other by the O-rings 4, and the assembly of the shaft bearing 1 is completed, as illustrated in FIG. 1.

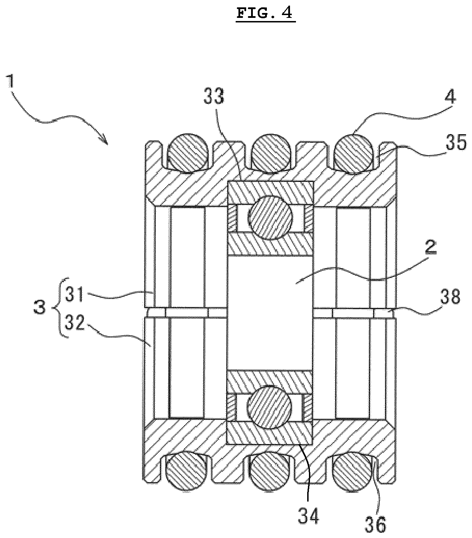

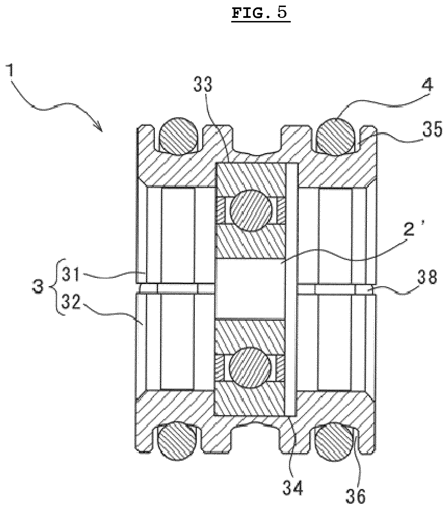

As illustrated in FIGs. 4 and 5, the O-rings 4 are in a state where the outer peripheral surfaces thereof are outwardly projecting from the outer grooves 35 and 36. Then, when the shaft bearing 1 is assembled, the O-rings 4 do not need to be stored in all of the annular outer grooves. As illustrated in FIG. 5, a press-fitting load of the shaft bearing 1 can be adjusted by changing the number of the O-rings 4 which are a plurality of elastic rings. Moreover, a press-fitting load of the shaft bearing 1 can also be adjusted by changing the thickness, shape, material, or the like of the elastic rings.

By using the bearing 2, the shaft bearing 1 can reduce rotational resistance more than when a conventional bush (slide bearing) is used. Moreover, the shaft bearing 1 can be reduced in weight by using the lightweight holder 3. Further, the shaft bearing 1 can bring about high advantageous effects of little off-center of a shaft, satisfactory workability of assembly, and a small required amount of oil (grease) during assembly.

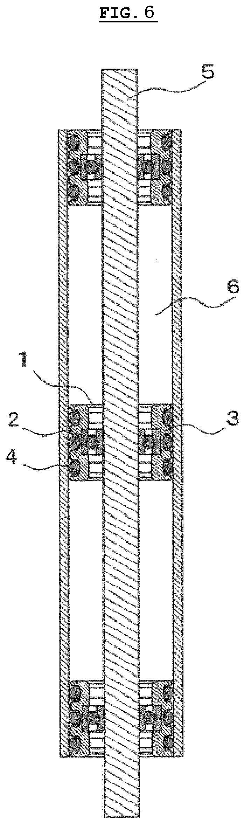

FIG. 6 is a schematic sectional view of a rod of a brush cutter when the shaft bearing 1 according to the present invention is used in the brush cutter. Three shaft bearings 1 are attached inside a pipe 6 of the rod, and thus a drive shaft 5 of the brush cutter is rotatably held by the shaft bearings 1. In this instance, the shaft bearings 1 have the O-rings 4 partly projecting from the outer peripheral surface of the holder 3. Accordingly, the O-rings 4 contact the inner peripheral surface of the pipe 6, and the shaft bearings 1 are thus held in the pipe 6. In this way, when the shaft bearing 1 according to the present invention is used in a rechargeable brush cutter using a battery, the duration time of the battery can be longer by reducing rotational resistance of the drive shaft. Moreover, the shaft bearing 1 is light in weight, and thus the brush cutter can also be reduced in weight. The shaft bearing 1 can also be used in a drive shaft of any machine other than a brush cutter.

The shaft bearing 1 can adapt to various shafts by changing the bearing 2 to suit to a shaft to be borne. For example, as illustrated in FIG. 5, by using a bearing 2' having the same outside diameter as the bearing 2 and having a smaller inside diameter, the shaft bearing 1 can adapt to a shaft having a small diameter, while the holder 3 and the O-ring 4 are the same components. In this way, while using the same holder 3 and O-ring 4, the shaft bearing 1 according to the present invention can adapt to shafts having different diameters by changing only bearings.

Furthermore, as illustrated in FIG. 5, the bearing 2' also has smaller width than the bearing 2, but can be stored in the inner groove on the inner peripheral surface of the holder 3, and therefore has structurally no problem. Moreover, by providing a further groove in the inner groove of the holder 3, it is possible to adapt to bearings having different outside diameters and width. In this way, as long as storable in the inner groove on the inner peripheral surface of the holder 3, it is possible to adapt to various shafts by suitably replacing the bearing 2. Since the same components can be used for the holder 3 and the O-ring 4, the shaft bearing 1 of the brush cutter according to the present invention can adapt to various shafts at low cost, and can easily adapt to a shaft of any machine other than a brush cutter as well.

### [Description of Reference Numbers]

- 1: drive shaft bearing
- 2, 2': ball bearing
- 3: holder
- 31: first member
- 32: second member
- 33, 34: inner groove
- 35, 36: outer groove
- 37: depression
- 38: projection
- 4: O-ring
- 5: drive shaft
- 6: pipe

## Claims

1. A brush cutter having a drive shaft bearing (1) comprising a ball bearing (2), a cylindrical holder (3), and an elastic ring (4), wherein the holder (3) is formed by combining two members (31, 32) divided parallel to an axial direction, and is assembled in a state where an outer peripheral part of the bearing (2) is stored in an inner groove (33, 34) formed on an inner peripheral surface of the holder in a peripheral direction, and the elastic ring (4) is stored in an outer groove (35, 36) formed on an outer peripheral surface of the holder in the peripheral direction.

2. The brush cutter according to claim 1, wherein a plurality of outer grooves (35, 36) of the holder are formed, and the elastic ring (4) is inserted in at least one of the outer grooves.

3. The brush cutter according to claim 1 or 2, wherein an O-ring is used as the elastic ring.

4. The brush cutter according to any one of claims 1 to 3, wherein the divided members of the holder are provided, on the surfaces thereof facing each other, with a depression (37) and a projection (38), and the projection of one of the members is inserted into the depression of the other member when the holder is assembled.

5. The brush cutter according to any one of claims 1 to 4, wherein the holder is made of resin, rubber, or metal.

## Patentansprüche

1. Ein Bürstenschneider mit einem Antriebswellenlager (1), das ein Kugellager (2), eine zylindrische Halterung (3) und einen elastischen Ring (4) umfasst, wobei die Halterung (3) durch Kombinieren von zwei Elementen (31, 32) gebildet wird, die parallel zu einer axialen Richtung geteilt sind, und in einem Zustand zusammengebaut ist, in dem ein äußerer Umfangsteil des Lagers (2) in einer inneren Nut (33, 34) gelagert ist, die an einer inneren Umfangsfläche der Halterung in einer Umfangsrichtung ausgebildet ist, und der elastische Ring (4) in einer äußeren Nut (35, 36) gelagert ist, die an einer äußeren Umfangsfläche der Halterung in der Umfangsrichtung ausgebildet ist.

2. Bürstenschneider gemäß Anspruch 1, wobei mehrere äußere Nuten (35, 36) der Halterung ausgebildet sind und der elastische Ring (4) in mindestens eine der äußeren Nuten eingesetzt ist.

3. Bürstenschneider gemäß Anspruch 1 oder 2, wobei als elastischer Ring ein O-Ring verwendet wird.

4. Bürstenschneider gemäß einem der Ansprüche 1 bis 3, wobei die geteilten Elemente der Halterung an ihren einander zugewandten Oberflächen mit einer Vertiefung (37) und einem Vorsprung (38) versehen sind und der Vorsprung eines der Elemente beim Zusammenbau der Halterung in die Vertiefung des anderen Elements eingesetzt wird.

5. Bürstenschneider gemäß einem der Ansprüche 1 bis 4, wobei die Halterung aus Harz, Gummi oder Metall hergestellt ist.

## Revendications

1. Débroussailleuse ayant un palier d'arbre d'entraînement (1) comprenant un roulement à billes (2), un support cylindrique (3) et un anneau élastique (4), dans laquelle le support (3) est formé en combinant deux éléments (31, 32) divisés parallèlement à une direction axiale, et est assemblé dans un état où une partie périphérique externe du roulement (2) est insérée dans une rainure interne (33, 34) formée sur une surface périphérique interne du support dans une direction périphérique, et l'anneau élastique (4) est inséré dans une rainure externe (35, 36) formée sur une surface périphérique externe du support dans la direction périphérique.

2. Débroussailleuse selon la revendication 1, dans laquelle une pluralité de rainures externes (35, 36) du support est formée et l'anneau élastique (4) est inséré dans au moins une des rainures externes.

3. Débroussailleuse selon la revendication 1 ou 2, dans laquelle un joint torique est utilisé comme anneau élastique.

4. Débroussailleuse selon l'une quelconque des revendications 1 à 3, dans laquelle les éléments divisés du support sont pourvus, sur leurs surfaces se faisant face, d'une dépression (37) et d'une saillie (38), et la saillie de l'un des éléments est insérée dans la dépression de l'autre élément lorsque le support est assemblé.

5. Débroussailleuse selon l'une quelconque des revendications 1 à 4, dans laquelle le support est réalisé en résine, caoutchouc ou métal.
